(19) **Europäisches Patentamt / European Patent Office / Office européen des brevets**

(11) **EP 2 364 433 B1**

(12) **FASCICULE DE BREVET EUROPEEN**

(45) Date de publication et mention
de la délivrance du brevet:
**30.03.2016 Bulletin 2016/13**

(21) Numéro de dépôt: **09796662.6**

(22) Date de dépôt: **04.12.2009**

(51) Int Cl.:
***G06F 17/30*** *(2006.01)*

(86) Numéro de dépôt international:
**PCT/EP2009/066399**

(87) Numéro de publication internationale:
**WO 2010/063821 (10.06.2010 Gazette 2010/23)**

(54) **PROCÉDÉS D'ACCÈS À UNE BASE DE DONNÉES DE NAVIGATION**

VERFAHREN ZUM ZUGRIFF AUF EINE NAVIGATIONS-DATENBANK

METHODS OF ACCESSING A NAVIGATION DATA BASE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.12.2008 FR 0806835**

(43) Date de publication de la demande:
**14.09.2011 Bulletin 2011/37**

(73) Titulaire: **THALES**
**92200 Neuilly-sur-Seine (FR)**

(72) Inventeurs:
• **GAMET, Pierre**
**F-31700 Blagnac (FR)**

• **CHAIX, Philippe**
**F-31170 Tournefeuille (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 978 707    WO-A-2004/085964**
**US-A- 4 827 419**

**Description**

La présente invention concerne le domaine des bases de données embarquées dans des systèmes de navigations. Plus particulièrement, le domaine de l'invention se rapporte aux particularités des mécanismes d'indexation d'une base de données de navigation, des accès aux données de navigation et de l'optimisation du temps d'accès aux données d'une telle base. Généralement, le domaine de l'invention concerne les bases de données de grandes capacités comportant un nombre important de données, notamment des données aéronautiques.

Dans les systèmes de navigation d'aéronefs actuels, une base de données de navigation est généralement nécessaire pour stocker notamment les données relatives aux plans de vol, aux procédures de vol, aux routes, aux aéroports, aux balises et aux waypoints.

Ces bases de données nécessitent de nombreux accès lors d'un vol notamment pour définir ou modifier un plan de vol, enclencher une procédure particulière tel qu'une procédure d'atterrissage, une procédure de décollage ou encore une procédure d'approche ou de rejointe.

Lorsqu'un pilote recherche un aéroport par exemple, les bases de données actuelles effectuent soit une recherche dichotomique soit une recherche linéaire sur des tables d'objets classés suivant le critère de recherche.

En ce qui concerne les bases de données de navigation, généralement leur taille impose l'utilisation d'index. Dans ce cas, la base de données peut permettre une première recherche sur un index puis un accès en lecture aux objets de la base de données.

Le document WO 2004/085964 décrit un système embarqué de gestion de vol pour aéronef, dont les procédures de navigation répertoriées dans la base de données de navigation ont été indexée par un identifiant. Lorsqu'une procédure de navigation répertoriée est mentionnée par son identifiant sur la console d'affichage et d'entrée de données, le calculateur de gestion de vol fait apparaître sur l'écran de navigation le tracé de la partie de plan de vol correspondant, indexé par l'identifiant de la procédure de navigation.

De nombreuses applications du système de navigation, tel que par exemple le système de management de vol d'un aéronef, également appelé FMS, nécessitent de réaliser de nombreuses requêtes de type très divers sur la base de données de navigation à l'initialisation puis durant certaines phases de vol d'un aéronef.

En outre, la sécurisation d'un vol impose, lors des échanges de données entre les divers applications du système de navigation et la base de données de navigation, de minimiser les temps de réponse, d'améliorer l'efficacité des applications, de réduire les taux d'erreurs et d'optimiser les recherches de données.

Un problème connu lié à la recherche dans une base de données de navigation sur la base d'un critère de recherche est que les temps de réponse risquent d'être augmenter si plusieurs informations liées aux objets de la base de données sont analysées alors qu'elles ne sont pas exploitées par la suite par l'application.

Un second problème généralement rencontré, lors d'une utilisation d'un index par une application cliente dans une recherche dans la base de données de navigation, est que l'accès à la base nécessite de lire l'objet ciblé pour en connaître le type par exemple. Cet accès en lecture requiert donc une indirection inutile si l'objet recherché est d'un type donné.

Un autre problème généralement rencontré est le grand volume mémoire occupé par ces index.

Enfin un problème lié à l'utilisation d'un index est que l'index renvoie généralement à un identifiant d'un objet permettant de retrouver l'objet dans la base de données. Il est alors nécessaire de ré-effectuer une recherche dans la base de données de navigation à partir des identifiants des objets.

Une limitation est donc celle du temps de réponse des requêtes à la base de données et de l'extraction des données recherchées. Notamment, lorsque certains système ne sont pas embarqués tels que ceux de Windows, la solution qui consiste à indexer un maximum de données de la base de données permet de faciliter les recherches. En revanche cette solution est couteuse en mémoire pour des systèmes électroniques ayant pour vocation à être embarqués dans un aéronef.

Dans d'autres applications critiques du point de vue de la mémoire disponible, l'indexation peut diminuer les performances des temps de réponse des requêtes.

Par ailleurs un second problème est celui du droit d'accès aux données.

L'invention permet de pallier aux inconvénients précités.

Une solution de l'invention consiste à établir un procédé d'accès à une base de données de navigation, par la création de couples d'index étant structurés de manière à optimiser les recherches dans la base de données de navigation. Notamment, un premier pré-index comprend les adresses des objets dans un second index. Le second index comprend avantageusement les adresses physiques des objets de la base de données de navigation.

L'invention permet d'optimiser le rapport du nombre d'index créés et de la taille de la base de données de manière à diminuer au maximum les temps de réponse des requêtes sur la base de données.

En outre, l'invention comprend un procédé d'accès aux données mise en oeuvre par un système de navigation embarqué permettant lors d'une recherche d'un objet ou d'une collection d'objets dans la base, suivant un critère donné :

■ d'effectuer une première recherche dans un premier index sur les entrées correspondant au critère ; une application du système de navigation générant des requêtes sur la base de données de navigation est alors renvoyée vers un résultat correspondant à un sous-ensemble classé de données d'un autre index qui liste les objets qui correspondent aux critères.

■ d'effectuer une seconde recherche dichotomique sur ce sous-ensemble.

Lors de cette recherche dichotomique, il n'est pas nécessaire de lire le registre de la base de données dans lequel l'objet est stocké physiquement pour connaître son type. Les accès mémoires sont de ce fait simplifiés.

L'invention permet d'établir une phase de production de la base de données par la création d'au moins un couple d'index.

Un des deux index créé est un pré-index du second index créé. Cette pré-indexation a pour avantage de réduire le nombre d'opérations nécessaires à converger lors d'une recherche dichotomique.

En outre, lors de la création d'au moins un couple d'index, l'invention comprend une étape de création d'une clef qui autorise l'utilisation de la base par le système de navigation embarqué.

Avantageusement, le procédé d'accès à une base de données de navigation au moyen d'un calculateur de bord, la base de données de navigation étant destinée à être intégrée dans un système de navigation pour aéronef comportant ledit calculateur, la base de données comprend :

■ un premier ensemble d'éléments, appelés Fix, comprenant notamment des représentations d'aéroports, de balises et de waypoints, ainsi que les coordonnées géographiques desdits Fix ;

■ un second ensemble d'éléments comprenant des procédures, chaque procédure étant définies par une succession de transitions, les transitions comprenant un ensemble de manoeuvres de l'aéronef, les manoeuvres étant des instructions prédéfinies dans le système de navigation ;

■ un troisième ensemble d'éléments comprenant des représentations de routes formées par une succession de waypoints et/ou d'aéroports,

Avantageusement, le procédé d'accès à une base de données de navigation comprend une étape de création d'un couple d'index comprenant :

• un premier index alphanumérique comprenant :

   o les éléments du premier, second et troisième ensemble ;
   o des attributs de chaque élément, les attributs comprenant au moins l'identifiant, le type et l'identifiant fonctionnel dudit élément ;
   o une première liste de pointeurs, chaque pointeur étant associé à un élément, désignant l'adresse mémoire où les éléments sont stockés dans la base de données de navigation,

le premier index étant ordonné selon au moins un type d'attributs, appelé AT_ORD,
• un pré-index alphanumérique comprenant :

   o une liste de codes, chaque code étant unique et correspondant aux premiers caractères de chacune des données de l'AT_ORD de chaque élément de la base de données de navigation ;
   o une seconde liste de pointeurs, chaque pointeur étant associé à un code et pointant l'identifiant, dans le premier index, de chaque premier élément dont l'AT_ORD comporte le code associé.

Avantageusement, la base de données de navigation comprend :

■ un quatrième ensemble d'éléments, les éléments comprenant des représentations des cellules géographiques couvrant une surface déterminée, les cellules étant repérées par des coordonnées géographiques, les cellules comprenant une liste d'éléments du premier ensemble,

Avantageusement, le procédé d'accès à une base de données de navigation comprend la création :

• d'un second index géographique comprenant :

   o une liste des cellules géographiques ;
   o une troisième liste de pointeurs, chaque cellule étant associée à un pointeur, vers l'adresse mémoire où les cellules géographiques sont stockées dans la base de données ;

o la taille de chaque liste.

Avantageusement, un ensemble de couples comprenant un premier index et un pré-index est crée, chacun des couples d'index étant ordonné selon au moins un type d'attribut d'un élément de la base de données de navigation.

Avantageusement, les codes la liste de codes correspondent aux deux premiers caractères de chacune des données de l'AT_ORD de chaque élément de la base de données de navigation.

Avantageusement, les codes la liste de codes correspondent aux trois premiers caractères de chacune des données de l'AT_ORD de chaque élément de la base de données de navigation.

Avantageusement, le procédé de création de couples d'index de l'invention comprend la création d'une clef de démarrage en en-tête de la base de données lisible par un calculateur du système de navigation.

Avantageusement, une première recherche linéaire des premiers caractères dans les éléments du pré-index détermine les adresses mémoires des identifiants du premier et du dernier éléments correspondant dans le premier index.

Avantageusement, une seconde recherche dichotomique dans une liste d'éléments du premier index correspondant au critère de recherche détermine l'adresse mémoire du critère dans la base de données de navigation.

D'autres caractéristiques et avantages de l'invention apparaîtront à l'aide de la description qui suit, faite en regard des dessins annexés qui représentent :

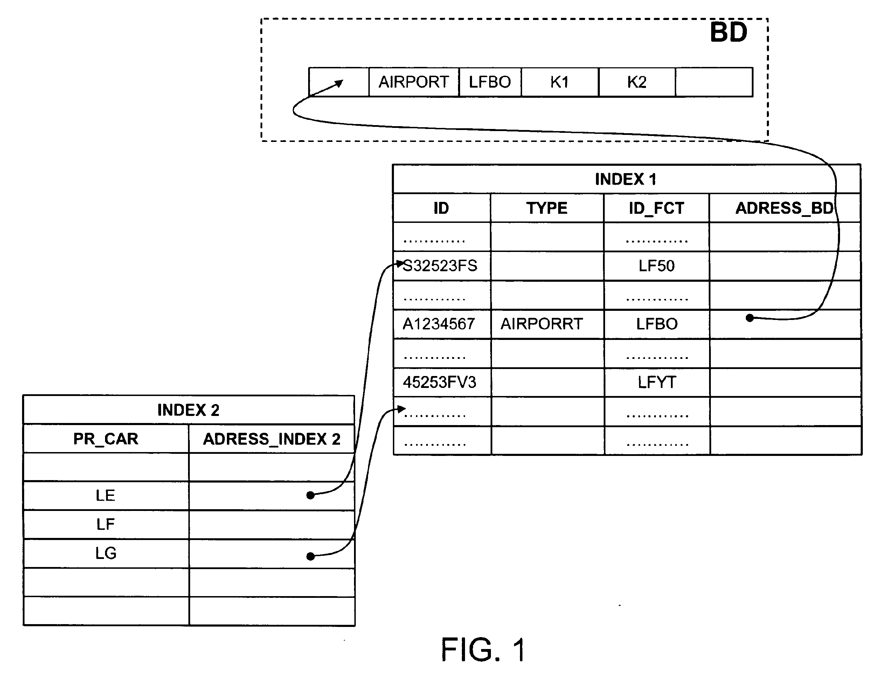

• la figure 1 : deux index d'une base de données de navigation selon l'invention;

L'invention permet de produire une base de données comportant des caractéristiques simplifiant les accès aux données et améliorant la rapidité des réponses.

Une première étape de la production de la base de données est la création d'index permettant de simplifier les accès aux données.

La figure 1 représente deux index créées selon le procédé de l'invention, il représente également le registre mémoire de la base de données de navigation où est stockée un objet de la base.

Un premier index, appelé index 1, créée est celui de la liste de tous les objets de la base de données de navigation.

Cet index comprend les identifiants des objets, noté ID, le type de l'objet, noté TYPE, l'identifiant fonctionnel, noté ID_FCT, et le pointeur vers la zone mémoire de la base de données où est stocké l'objet, appelé ADRESS_BD, ainsi qu'éventuellement d'autres attributs selon les modes de réalisations.

L'identifiant ID d'un objet est une clef de la base de données. Il peut s'agir par exemple de l'identifiant UUID, dont l'acronyme anglo-saxon signifie « Universally Unique Identifer », c'est à dire le numéro universel de l'objet.

Le type de l'objet peut comprendre notamment : une route, une procédure ou un FIX.

Un FIX est un point défini de l'espace généralement utilisé en aéronautique, il regroupe notamment les aéroports, les waypoints et les balises. Généralement, un waypoint est un point de l'espace permettant de définir un point de passage d'un plan de vol.

Selon les modes de réalisation de l'invention, le type d'un objet peut-être soit un des éléments suivants :

• un FIX ;
• une procédure ;
• une route ;

soit un des éléments suivants :

• un waypoint ;
• un aéroport ;
• une balise ;
• une procédure ;
• une route ;

selon si un FIX est considéré comme un type d'un objet ou non.

L'identifiant fonctionnel ID_FCT désigne le code d'un type, il peut s'agir par exemple du code OACI pour un aéroport, l'aéroport de Toulouse serait identifié par le code LFBO.

Enfin, le pointeur ADRESS_BD vers la zone mémoire de la base de données où est stockée l'objet ainsi que ses attributs et un registre mémoire d'une base de données.

L'index 1, ainsi créée, peut être ordonné de plusieurs manières selon l'utilisation de l'opérateur ou du pilote dans les requêtes interrogeant la base de données de navigation. L'invention permet notamment d'ordonner cet index selon les identifiants, les types des objets ou encore les identifiants fonctionnels.

Les utilisations préférées sont déterminées à partir des critères de recherche les plus utilisés.

Lors de la création de la base de données, l'invention permet de créer éventuellement plusieurs index, correspondant à l'index 1 mais ordonné selon différents critères. L'index utilisé selon la recherche sera choisi de manière à minimiser les temps de réponse.

La figure 1 représente un second index, noté INDEX 2, comprenant une liste des premiers caractères, noté PR_CAR, d'un ensemble d'objets de la base de données. L'INDEX 2 comprend également les adresses physiques dans l'INDEX 1 de chaque premier objet comprenant les premiers caractères de la liste.

Selon les modes de réalisations l'ensemble des objets de l'INDEX 2 comprend soit :

- l'ensemble des premiers caractères de tous les identifiants de la base de données de navigation ;
- l'ensemble des premiers caractères de tous les types de la base de données de navigation ;
- l'ensemble des premiers caractères de tous les identifiants fonctionnels de la base de données de navigation ;
- l'ensemble des premiers caractères de tous les objets de la base de données de navigation.

Dans un mode de réalisation, l'INDEX 2 est une table d'indexation sur les deux premiers caractères du critère qui va être utilisé pour la recherche dans la base de données.

Dans d'autres mode de réalisations, l'invention permet de mettre en oeuvre le avec un, deux ou trois ou plus de caractères.

Chacune des « lignes » possède les informations suivantes :

- un caractère, un couple ou un triplet de caractères.

Par exemple, les deux premiers caractères '"LF" dans l'INDEX 2 désigne tous les objets commençants par les caractères "LF" de la base de données de navigation.

L'INDEX 2 comprend également chaque pointeur vers le premier Object ID de l'INDEX 1 comprenant les premiers caractères du critère correspondant.

Ainsi pour extraire les objets de l'INDEX 1 commençant par les premiers caractères du critère correspondant, dans l'exemple LF, l'invention permet :

- d'une part de relever dans l'INDEX 1, l'adresse physique inscrite dans la ligne de l'élément figurant dans l'INDEX 1 correspondant à l'adresse physique du premier objet de l'INDEX 2 comprenant les premiers caractères ;
- d'autre part de relever dans l'INDEX 1, l'adresse physique inscrite dans la ligne de l'élément suivant figurant dans l'INDEX 1 correspondant à l'adresse physique du premier objet de l'INDEX 2 succédant le dernier élément comprenant les premiers caractères.

Un avantage de l'invention est qu'il comprend la création d'un couple d'index par critère de recherche.

L'INDEX 1 et l'INDEX 2 sont créés de manière à

L'invention permet de définir une liste de premiers caractères d'un premier ensemble d'objets de la base de données de l'INDEX 1 correspondant à un ordonnancement de l'INDEX 2 selon le premier ensemble d'objets de la base de données.

Ainsi, l'invention permet par exemple de créer plusieurs couples d'INDEX différent selon le choix de l'ensemble d'objets de la base de données. Dans ce cas là, selon les critères de recherches un couple d'INDEX est privilégié de manière à optimiser les temps de réponses.

Un premier ensemble d'objets peut comprendre les TYPE de tous les objets de la base de données de navigation.

L'INDEX 2 comprend alors, par exemple, la liste des deux premiers caractères de chaque TYPE et l'INDEX 1 est ordonné selon les TYPE des objets de la base de données de navigation.

Un second ensemble d'objets peut comprendre les identifiants fonctionnels ID_FCT de tous les objets de la base de données de navigation.

L'INDEX 2 comprend alors, par exemple, la liste des deux premiers caractères de chaque ID_FCT et l'INDEX 1 est ordonné selon les ID_FCT des objets de la base de données de navigation.

Un troisième ensemble d'objets peut comprendre les identifiants ID de tous les objets de la base de données de navigation.

L'INDEX 2 comprend alors, par exemple, la liste des deux premiers caractères de chaque ID et l'INDEX 1 est ordonné selon les ID des objets de la base de données de navigation.

Dans cet exemple trois couples d'INDEX sont créés.

Selon le type des accès requis par une application nécessitant des requêtes sur la base de données de navigation, d'autres couples d'INDEX peuvent être créés comme les exemples précédents.

L'invention permet par exemple de créer :

- Deux INDEX pour un accès par UUID ;
- Deux INDEX pour un accès par identifiant de Fix, un FIX étant soit un aéroport, un waypoint ou une balise ;

Ce système de double INDEX peut-être utilisé pour des recherches sur différents critères, par exemple :

- directement sur l'identifiant ID ;
- sur le nom d'un FIX ;
- sur le nom d'un FIX de type défini ;
- sur des nombres non consécutifs.

Un avantage de l'invention est que dans la création des INDEX les liens symboliques, par exemple les identifiants ID des objets sont remplacés par les adresses physiques des objets dans la base de données de navigation.

Cette résolution de liens peut s'appliquer à d'autres types d'indexation. Par exemple, elle s'applique également à l'indexation géographique.

Dans ce dernier exemple, le monde étant virtuellement divisé en dalles, chaque dalle renvoie l'application à une liste d'identifiants ID. Ces listes d'identifiants ID d'objet sont remplacées par les listes d'adresses physiques correspondantes. Le nombre d'indirections de l'application est ainsi réduit.

L'invention permet également de créer une clef de démarrage que seule une application embarquée ciblée, générant des requêtes sur la base de données de navigation, connait. Cette clef peut, par exemple, être ajoutée en en-tête de la base de données.

L'invention comprend également un procédé d'accès aux données de la base de données de navigation en utilisant les couples d'INDEX précédemment créés. Dans la mise en oeuvre de ce procédé, une application quelconque ayant vocation à générer des requêtes sur la base de données de navigation est apte à utiliser ce procédé d'accès.

L'accès à une donnée selon un critère donné s'effectue en plusieurs étapes.

Un exemple de recherche peut être un critère de recherche d'un aéroport, c'est-à-dire un TYPE particulier de FIX, suivant son code OACI, c'est-à-dire son identifiant fonctionnel. L'aéroport de "Toulouse" correspond par exemple au code "LFBO".

Une première étape comprend une recherche dans l'INDEX 2 sur les deux premiers caractères de l'identifiant fonctionnel, dans l'exemple il peut s'agir des premiers caractères du code du couple LF.

L'application connaît alors le premier est le dernier enregistrement dont l'identifiant fonctionnel commence par LF de l'INDEX 1 ordonné par les identifiants fonctionnels d'objet ID.

Cette première étape est toujours optionnelle puisque l'application mettant en oeuvre le procédé d'accès peut effectuer directement la seconde étape. En revanche, en omettant cette première étape, la recherche nécessitera davantage d'opérations pour converger.

La seconde étape comprend une recherche dichotomique optimisée sur la base d'un critère de recherche sur le TYPE dans le sous ensemble d'objets dont l'identifiant fonctionnel commence par le couple de caractères "LF".

L'application effectue une recherche dichotomique en rejetant automatiquement les objets qui ne sont pas de type "aéroport".

La troisième étape comprend l'extraction des données de l'objet recherché à l'endroit physique où les données concernant l'identifiant fonctionnel de l'objet sont stockées. Par exemple, l'identifiant fonctionnel peut être "LFBO", désignant l'aéroport de Toulouse.

L'invention permet également de rechercher une collection d'objets donnés par leur identifiant ID respectifs et sur lesquels une sélection sur un critère de TYPE et un critère géographique est effectuée.

Pour chaque objet, les étapes suivantes se succèdent :

La première étape comprend une recherche sur les premiers caractères de l'identifiant de l'objet.

La seconde étape comprend une extraction d'un ensemble d'objets dont le TYPE correspond au critère de recherche.

Enfin une recherche géographique peut avoir lieu sur cette sélection d'objets déterminés.

Un avantage de cette solution est qu'une application générant des requêtes sur la base de données de navigation n'a pas besoin de lire les données géographiques des objets dont le type ne correspond pas au critère de recherche. Le nombre d'indirections et de lectures est réduit et les temps de réponse sont améliorés.

Un autre avantage de l'invention est lié au confort d'utilisation et à l'ergonomie facilitant les recherches par l'intermédiaire d'index correspondant notamment à des besoins spécifiques de pilotes.

Enfin, un avantage de l'invention lié à la sécurité est qu'une application embarquée générant des requêtes sur la base de données de navigation nécessite la connaissance d'une clef de démarrage, celle-ci ne peut pas être opérationnelle sans elle.

Cette caractéristique permet une amélioration de la sécurité de tels systèmes et du confort d'utilisation.

■ Un premier avantage en terme de temps de réponse est que lors de la recherche d'un objet par son identifiant fonctionnel par exemple "LFBO", l'application obtient directement les pointeurs vers le premier objet dont l'identifiant commence par LF et vers le dernier objet dont l'identifiant commence par LF. Pour converger, la recherche dichotomique requiert moins d'itérations.

La réduction du nombre d'itérations peut-être évalué de la manière suivante :

On note Nb_Carac_Index le nombre de caractères d'indexation et Nb_Total_Objets le nombre total d'objets. Dans un exemple de réalisation, la valeur de Nb_Carac_Index est égale à 40 en comptant les lettres, les chiffres et certains caractères spéciaux.

Dans le cas d'une indexation sur deux caractères alphanumériques, il y a donc $Nb\_Carac\_Index^2$ combinaisons.

En supposant une distribution uniforme des données sur les différents caractères, un sous-ensemble correspondant à un couple de lettre comporte en moyenne $\dfrac{Nb\_Total\_Objets}{Nb\_Carac\_Index^2}$ éléments.

Le nombre Nb_Iter d'itérations requises est :

$$Nb\_Iter = \log_2(Nb\_Total\_Objets) - 2\cdot\log_2(Nb\_Carac\_Index).$$

Le nombre d'itérations est diminué en moyenne de $2\cdot\log_2(Nb\_Carac\_Index)$.

■ Un second avantage en terme de temps de réponse est que lors de la recherche dichotomique, l'application peut directement connaître le type de l'objet sans avoir à accéder à la zone mémoire où l'objet est physiquement stocké. Le nombre d'indirections en est ainsi réduit.

Dans un mode de réalisation privilégié, l'invention comprend un troisième index, noté INDEX 3, comprenant des données représentant des cellules géographiques. Cet index permet d'accéder plus rapidement à des informations de la base de données de navigation notamment comprises dans une région donnée.

Dans une variante de réalisation, par exemple, chacune des cellules géographiques correspond à une surface de l'espace prédéterminée. Cette surface peut être définie par une largeur et une longueur exprimées en degrés et une position.

Par exemple, une cellule géographique peut être une surface de 1° en latitude sur 1° en longitude. La Terre est alors composée de 64800 cellules.

L'invention permet de créer un INDEX 3 comprenant la liste de toutes les cellules et l'inscription de la position de l'adresse mémoire où est stockée la cellule dans la base de données de navigation.

Dans un mode de réalisation, chaque ligne de l'INDEX 3 définissant une cellule géographique comporte une donnée définissant la taille de la liste des éléments compris dans ladite cellule géographique.

Ainsi, il est possible d'accéder à la zone mémoire où est stockée la cellule géographique dans la base de données de navigation par comparaison de la taille du nombre d'éléments compris dans une zone géographique et une position connue de référence d'une zone géographique dans la mémoire.

Enfin, l'invention présente un autre mode de réalisation, comprenant la définition d'un ensemble de procédure prédéfinie telle que notamment :

- un atterrissage ;
- une procédure d'approche ;
- une procédure décollage ;
- une procédure de rejointe d'un plan de vol
- une procédure d'attente
- etc.

Chaque procédure comprend un ensemble de transitions, chaque transition étant définie par un ensemble de LEG. Un LEG est une manoeuvre donnée d'un aéronef. Ils sont généralement définis par rapport à au moins un FIX.

Des exemples de LEG prédéfinis sont :

- un virage par rapport à un point de référence donné par un FIX ;
- la rejointe d'un FIX ;
- etc.

L'invention permet de lier chacune des procédures à un ensemble de transitions, elles-mêmes étant chacune liées à un ensemble de LEG, les LEG étant définis dans la base de données de navigation.

L'invention permet de définir dans chaque lien entre respectivement :

- une procédure et les transitions comprises dans ladite procédure ;
- une transition et les LEG compris dans ladite transition ;
- un LEG et les FIX compris dans ledit LEG ;

les adresses physiques des éléments, les éléments comprenant des transitions, des LEG et des FIX.

Ainsi une procédure peut comprendre :

- une première transition comprenant une première adresse physique dans la base de données de navigation ;
- une seconde transition comprenant une seconde adresse physique dans la base de données de navigation et ;
- enfin une troisième transition comprenant une première adresse physique dans la base de données de navigation.

Les liens qui lient une procédure aux adresses physiques de chaque élément de ladite procédure permettent de réduire les temps d'accès aux informations lors de l'exécution de la procédure. Les éléments d'une procédure comprennent notamment des transitions, des LEG et des FIX.

Une transition peut comprendre une succession de LEG et leurs adresses physiques dans la base de données de navigation.

Pareillement, un LEG peut comprendre un FIX et l'adresse physique de ce FIX dans la base de données de navigation.

Un avantage du procédé d'accès à la base de données est que chaque couple d'index créée est un moyen d'accès à la base de données de navigation permettant de réduire les temps de réponses des applications aéronautiques nécessitant des requêtes à la base de données de navigation.

En outre, un autre avantage est que la création d'index répond à une exigence de diminution des traitements par le calculateur de bord. La base de données de navigation est une base comprenant un très grand nombre de données de nature différente et les accès à la base de données nécessitent de nombreuses opérations pouvant diminuer l'efficacité des missions en aéronautique. Dans certaines applications utilisées en aéronautique, à titre d'exemple certaines bases de navigation peuvent comporter de 600000 à 800000 éléments.

La création d'index permet alors de réduire un certains nombres d'opérations qui ne sont plus nécessaires selon les structures et le nombre d'index crées qui permettent d'optimiser les requêtes.

Un avantage de l'invention est notamment d'optimiser le compromis entre la taille de la base de données de navigation et le nombre d'index créés de manière à réduire les temps de réponse. Notamment, le système de navigation incluant la base de données de navigation étant embarqué généralement dans un cockpit d'aéronef, la problématique de la mémoire physique est primordiale pour ne pas pénaliser en temps de réponse les requêtes sur la base de données. Les solutions "tout indexer" ou "rien indexer" sont, par conséquent, non appropriés à une configuration d'utilisation où les systèmes sont embarqués.

Enfin, le personnel utilisant ces bases de données et les index crées selon l'invention est un personnel compétent et formé à de tels outils nécessitant un apprentissage de l'utilisation des bases de données de navigation. Les index créés selon l'invention sont donc crées de manière à répondre à des exigences de personnels formés et avertis.

## Revendications

1. Procédé d'accès à une base de données de navigation au moyen d'un calculateur de bord, la base de données de navigation (BD) étant destinée à être intégrée dans un système de navigation pour aéronef comportant ledit calculateur, la base de données comprenant:

   - un premier ensemble d'éléments, appelés Fix, comprenant notamment des représentations d'aéroports, de balises et des waypoints, ainsi que les coordonnées géographiques desdits Fix ;
   - un second ensemble d'éléments comprenant des procédures, chaque procédure étant définies par une succession de transitions, les transitions comprenant un ensemble de manoeuvres de l'aéronef, les manoeuvres étant des instructions prédéfinies dans le système de navigation ;

▪ un troisième ensemble d'éléments comprenant des représentations de routes formées par une succession de waypoints et/ou d'aéroports,

**caractérisé en ce que** le procédé comprend une étape de création d'un couple d'index comprenant :

• un premier index (INDEX 1) alphanumérique comprenant :

o les éléments du premier, second et troisième ensemble ;
o des attributs de chaque élément, les attributs comprenant au moins l'identifiant, le type et l'identifiant fonctionnel dudit élément
o une première liste de pointeurs, chaque pointeur étant associé à un élément, désignant l'adresse mémoire où les éléments sont stockés dans la base de données de navigation,

le premier index étant ordonné selon au moins un type d'attributs, appelé AT_ORD,

• un pré-index (INDEX 2) alphanumérique comprenant :

o une liste de codes (PR_CAR), chaque code étant unique et correspondant à un nombre prédéterminé des premiers caractères de chacune des données de l'AT_ORD de chaque élément de la base de données de navigation ;
o une seconde liste de pointeurs, chaque pointeur étant associé à un code et pointant l'identifiant, dans le premier index, de chaque premier élément dont l'AT_ORD comporte le code associé.

2. Procédé d'accès à une base de données de navigation selon la revendication 1, la base de données de navigation comprenant:

▪ un quatrième ensemble d'éléments, les éléments comprenant des représentations des cellules géographiques couvrant une surface déterminée, les cellules étant repérées par des coordonnées géographiques, les cellules comprenant une liste d'éléments du premier ensemble,

**caractérisé en ce qu'**il comprend la création :

• d'un second index géographique comprenant :

o une liste des cellules géographiques ;
o une troisième liste de pointeurs, chaque cellule étant associée à un pointeur, vers l'adresse mémoire où les cellules géographiques sont stockées dans la base de données ;
o la taille de chaque liste.

3. Procédé d'accès à une base de données de navigation selon l'une quelconque des revendications 1 à 2, **caractérisé en ce qu'**un ensemble de couples comprenant un premier index (INDEX1) et un pré-index (INDEX2) est crée, chacun des couples d'index étant ordonné selon au moins un type d'attribut d'un élément de la base de données de navigation.

4. Procédé d'accès à une base de données de navigation selon l'une quelconque des revendications 1 à 3, **caractérisé en ce que** les codes (PR_CAR) de la liste de codes correspondent aux deux premiers caractères de chacune des données de l'AT_ORD de chaque élément de la base de données de navigation.

5. Procédé d'accès à une base de données de navigation selon l'une quelconque des revendications 1 à 3, **caractérisé en ce que** les codes de la liste de codes correspondent aux trois premiers caractères de chacune des données de l'AT_ORD de chaque élément de la base de données de navigation.

6. Procédé d'accès à une base de données de navigation selon la revendication 1, **caractérisé en ce qu'**il comprend la création d'une clef de démarrage en en-tête de la base de données lisible par un calculateur du système de navigation.

7. Procédé de recherche d'un élément d'une base de données de navigation telle que définie dans la revendication 1 à partir d'un critère de recherche à partir d'au moins un couple d'index tel que défini dans les revendications 1 et 3, **caractérisé en ce que** :

• une première recherche linéaire des premiers caractères dans les éléments dudit pré-index (INDEX2) détermine les adresses mémoires des identifiants du premier et du dernier élément correspondant dans le premier index ;
• Une seconde recherche dichotomique dans une liste d'éléments dudit premier index (INDEX1) correspondant au critère de recherche détermine l'adresse mémoire du critère dans la base de données de navigation.

**Patentansprüche**

1. Verfahren zum Zugreifen auf eine Navigationsdatenbank mittels eines Bordcomputers, wobei die Navigationsdatenbank (BD) zum Integrieren in ein Navigationssystem für ein den Computer umfassendes Luftfahrzeug bestimmt ist, wobei die Datenbank Folgendes umfasst:

einen ersten Satz Elemente, Fix genannt, die insbesondere Darstellungen von Flughäfen, Baken und Wegpunkten sowie die geografischen Fix-Koordinaten umfassen;
einen zweiten Satz Elemente, die Prozeduren umfassen, wobei jede Prozedur durch eine Folge von Übergängen definiert wird, wobei die Übergänge einen Satz von Manövern des Luftfahrzeugs umfassen, wobei die Manöver in dem Navigationssystem vordefinierte Befehle sind;
einen dritten Satz Elemente, die Darstellungen von Routen umfassen, die von einer Folge von Wegpunkten und/oder Flughäfen gebildet werden,

**dadurch gekennzeichnet, dass** das Verfahren einen Schritt des Erzeugens eines Indexpaares beinhaltet, das Folgendes umfasst:

einen ersten alphanumerischen Index (INDEX 1), der Folgendes umfasst:

die Elemente des ersten, zweiten und dritten Satzes;
Attribute jedes Elementes, wobei die Attribute wenigstens die Kennung, den Typ und die Funktionskennung des Elements umfassen;
eine erste Liste von Zeigern, wobei jeder Zeiger mit einem Element assoziiert ist, das die Speicheradresse bezeichnet, an der die Elemente in der Navigationsdatenbank gespeichert sind,

wobei der erste Index gemäß wenigstens einem Attributtyp, AT_ORD genannt, geordnet ist,

einen alphanumerischen Vorindex (INDEX 2), der Folgendes umfasst:

eine Liste von Codes (PR_CAR), wobei jeder Code einmalig ist und einer vorbestimmten Anzahl von ersten Zeichen jedes Datenelements des AT_ORD jedes Elements der Navigationsdatenbank entspricht;
eine zweite Liste von Zeigern, wobei jeder Zeiger mit einem Code assoziiert ist und auf die Kennung, im ersten Index, jedes Elements zeigt, dessen AT_ORD den assoziierten Code umfasst.

2. Verfahren zum Zugreifen auf eine Navigationsdatenbank nach Anspruch 1, wobei die Navigationsdatenbank Folgendes umfasst:

einen vierten Satz Elemente, wobei die Elemente Darstellungen der geografischen Zellen umfassen, die eine bestimmte Fläche abdecken, wobei die Zellen durch geografische Koordinaten markiert sind, wobei die Zellen eine Liste von Elementen des ersten Satzes umfassen,

**dadurch gekennzeichnet, dass** es die Erzeugung beinhaltet von:

einem zweiten geografischen Index, der Folgendes umfasst:

eine Liste der geografischen Zellen;
eine dritte Liste von Zeigern, wobei jede Zelle mit einem Zeiger assoziiert ist, auf die Speicheradresse, an der die geografischen Zellen in der Datenbank gespeichert sind;
die Größe jeder Liste.

3. Verfahren zum Zugreifen auf eine Navigationsdatenbank nach einem der Ansprüche 1 bis 2, **dadurch gekennzeichnet, dass** ein Satz von Paaren umfassend einen ersten Index (INDEX 1) und einen Vorindex (INDEX 2) erzeugt wird, wobei jedes der Indexpaare gemäß wenigstens einem Attributtyp eines Elements der Navigationsdatenbank geordnet ist.

4. Verfahren zum Zugreifen auf eine Navigationsdatenbank nach einem der Ansprüche 1 bis 3, **dadurch gekennzeichnet, dass** die Codes (PR_CAR) der Code-Liste den zwei ersten Zeichen jedes Datenelements des AT_ORD jedes Elements der Navigationsdatenbank entsprechen.

5. Verfahren zum Zugreifen auf eine Navigationsdatenbank nach einem der Ansprüche 1 bis 3, **dadurch gekennzeichnet, dass** die Codes der Code-Liste den drei ersten Zeichen jedes der Datenelemente des AT_ORD jedes Elements der Navigationsdatenbank entsprechen.

6. Verfahren zum Zugreifen auf eine Navigationsdatenbank nach Anspruch 1, **dadurch gekennzeichnet, dass** es die Erzeugung eines Startschlüssels im Kopf der Datenbank umfasst, der von einem Computer des Navigationssystems gelesen werden kann.

7. Verfahren zum Suchen eines Elements einer Navigationsdatenbank wie in Anspruch 1 definiert auf der Basis eines Suchkriteriums auf der Basis eines Indexpaares wie in den Ansprüchen 1 und 3 definiert,
   **dadurch gekennzeichnet, dass**:

   eine erste lineare Suche der ersten Zeichen in den Elementen des Vorindex (INDEX 2) die Speicheradressen der Kennungen des entsprechenden ersten und letzten Elements im ersten Index ermittelt;
   eine zweite dichotomische Suche in einer Liste von Elementen des ersten Index (INDEX 1) entsprechend dem Suchkriterium die Speicheradresse des Kriteriums in der Navigationsdatenbank bestimmt.

**Claims**

1. A method for accessing a navigation database by means of an on-board computer, said navigation database (BD) being intended to be integrated into a navigation system for an aircraft comprising said computer, said database comprising:

   a first set of elements, called Fix, particularly comprising representations of airports, beacons and waypoints, as well as the geographical coordinates of said Fix;
   a second set of elements comprising procedures, each procedure being defined by a succession of transitions, said transitions comprising a set of manoeuvres of said aircraft, the manoeuvres being instructions predefined in said navigation system;
   a third set of elements comprising representations of routes formed by a succession of waypoints and/or airports,

   **characterised in that** said method comprises a step of creating an index pair comprising:

   a first alphanumeric index (INDEX 1) comprising:

   the elements of said first, second and third sets;
   attributes of each element, said attributes comprising at least the identifier, the type and the functional identifier of said element;
   a first list of pointers, each pointer being associated with an element, designating the memory address where the elements are stored in said navigation database,

   said first index being ordered according to at least one type of attributes, called AT_ORD,
   an alphanumeric pre-index (INDEX 2) comprising:

   a list of codes (PR_CAR), each code being unique and corresponding to a predetermined number of the first characters of each item of data of the AT_ORD of each element of said navigation database;
   a second list of pointers, each pointer being associated with a code and pointing at the identifier, in said first index, of each first element, the AT_ORD of which comprises the associated code.

2. The method for accessing a navigation database according to claim 1, said navigation database comprising:

a fourth set of elements, said elements comprising representations of the geographical cells covering a determined surface area, said cells being marked by geographical coordinates, said cells comprising a list of elements of said first set,

**characterised in that** it comprises the creation:

of a second geographical index comprising:

a list of said geographical cells;
a third list of pointers, with each cell being associated with a pointer, towards the memory address where said geographical cells are stored in said database;
the size of each list.

3. The method for accessing a navigation database according to any one of claims 1 to 2, **characterised in that** a set of pairs comprising a first index (INDEX 1) and a pre-index (INDEX 2) is created, each of said index pairs being ordered according to at least one type of attribute of an element of said navigation database.

4. The method for accessing a navigation database according to any one of claims 1 to 3, **characterised in that** said codes (PR_CAR) of said list of codes correspond to the two first characters of each item of data of the AT_ORD of each element of said navigation database.

5. The method for accessing a navigation database according to any one of claims 1 to 3, **characterised in that** said codes of said list of codes correspond to the three first characters of each of the items of data of the AT_ORD of each element of said navigation database.

6. The method for accessing a navigation database according to claim 1, **characterised in that** it comprises the creation of a starting key in the header of said database, which key can be read by a computer of said navigation system.

7. A method for searching an element of a navigation database according to claim 1 on the basis of a search criterion on the basis of an index pair according to claims 1 and 3,
**characterised in that**:

a first linear search of the first characters in the elements of said pre-index (INDEX 2) determines the memory addresses of the identifiers of the corresponding first and last element in the first index;
a second dichotomy search in a list of elements of said first index (INDEX 1) corresponding to the search criterion determines the memory address of the criterion in said navigation database.

EP 2 364 433 B1

**BD**

| | AIRPORT | LFBO | K1 | K2 | |
|---|---|---|---|---|---|

**INDEX 1**

| ID | TYPE | ID_FCT | ADRESS_BD |
|---|---|---|---|
| ………… | | ………… | |
| S32523FS | | LF50 | |
| ………… | | ………… | |
| A1234567 | AIRPORRT | LFBO | |
| ………… | | ………… | |
| 45253FV3 | | LFYT | |
| ………… | | ………… | |
| ………… | | ………… | |

**INDEX 2**

| PR_CAR | ADRESS_INDEX 2 |
|---|---|
| | |
| LE | |
| LF | |
| LG | |
| | |
| | |

FIG. 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004085964 A